(19) Europäisches Patentamt

European Patent Office

Office européen des brevets

(11) **EP 1 065 401 B1**

(12) **EUROPÄISCHE PATENTSCHRIFT**

(45) Veröffentlichungstag und Bekanntmachung des Hinweises auf die Patenterteilung:
**08.03.2006 Patentblatt 2006/10**

(51) Int Cl.:
***F16D 48/08*** *(2006.01)*

(21) Anmeldenummer: **00113852.8**

(22) Anmeldetag: **30.06.2000**

(54) **Kupplungsteuerung mit Regelung eines Solldrehmomentwertes bei einem Anfahrvorgang**

Clutch control for drive-off with determination of target clutch torque

Procédé de commande d'un embrayage pendant la phase de démarrage, avec la détermination d'une valeur de couple desirée

(84) Benannte Vertragsstaaten:
**ES FR GB SE**

(30) Priorität: **30.06.1999 DE 19929998**

(43) Veröffentlichungstag der Anmeldung:
**03.01.2001 Patentblatt 2001/01**

(73) Patentinhaber: **Ford Global Technologies, LLC Dearborn, MI 48126 (US)**

(72) Erfinder:
• **Auweiler, Juergen
50259 Pulheim (DE)**
• **Buerle, Peter
76275 Ettingen (DE)**

(74) Vertreter: **Drömer, Hans-Carsten et al
Ford-Werke Aktiengesellschaft,
Patentabteilung NH/DRP,
Henry-Ford-Strasse 1
50725 Köln (DE)**

(56) Entgegenhaltungen:
**DE-A- 19 711 618       GB-A- 2 321 940**

**Beschreibung**

Die Erfindung betrifft ein Verfahren zur Steuerung einer Kupplung für ein Kraftfahrzeug mit einer Vorrichtung zur automatisierten Betätigung der Kupplung im Antriebsstrang eines Kraftfahrzeuges.

Aus der DE 44 09 122 ist eine Vorrichtung zum Regeln einer Kraftfahrzeugkupplung bekannt geworden, bei welcher bei einem Anfahrvorgang die Betätigung in zwei Phasen drehzahlgeregelt wird. In einer ersten Phase wird die Eingangsdrehzahl zu einer Solldrehzahl hingeführt und in einer zweiten Phase wird ein Differenzdrehzahlsignal aus der Differenz zwischen einem Eingangsdrehzahlsignal und einem Ausgangsdrehzahlsignal einem vorgegebenen Sollverlauf bis zum Wert Null nachgeführt.

Aus der gattungsbildenden DE 19711618 ist ein Verfahren zur Steuerung einer Kupplung für ein Kraftfahrzeug mit einer Vorrichtung zur automatisierten Betätigung der Kupplung im Antriebsstrang des Fahrzeuges bekannt. Bei einem Anfahrvorgang wird das von der Kupplung übertragbare Drehmoment so geregelt, daß die Getriebedrehzahl bei im wesentlichen konstanter Motordrehzahl kontinuierlich erhöht wird. Die Anpassung der Motordrehzahl an die Getriebedrehzahl erfolgt, indem das übertragbare Drehmoment der Kupplung kurzfristig erhöht wird, wodurch die Motordrehzahl auf die Getriebedrehzahl absinkt.

Aufgabe der Erfindung ist es, ein Kraftfahrzeug mit einer Vorrichtung zur automatisierten Betätigung einer Kupplung und ein Verfahren zur Steuerung zu schaffen, welche bei einem Anfahrvorgang einen hohen Komfort und eine hohe Beschleunigung gewährleistet und gleichzeitig die Reibungsenergie im Bereich der Kupplung reduziert.

Erfindungsgemäß wird durch die Merkmale des Anspruchs 1 erreicht, daß bei einem Kraftfahrzeug mit einer Vorrichtung zur automatisierten Betätigung einer Kupplung im Antriebsstrang des Fahrzeuges, mit einem Antriebsmotor und einem Getriebe, mit einer Steuereinheit und einem von der Steuereinheit gesteuerten Aktuator zur Betätigung der Kupplung, wobei bei betätigtem Fahrpedal bei einem Anfahrvorgang das von der Kupplung übertragbare Drehmoment $M_K$ erhöht wird und im wesentlichen auf einen vorgebbaren Wert $M_{soll}$ gesteuert wird, das von der Kupplung übertragbare Drehmoment vor Erreichen der Drehzahlgleichheit zwischen Motordrehzahl und Getriebedrehzahl zumindest kurzfristig erhöht und wieder abgesenkt wird. Dadurch wird erreicht, daß nach Erreichen des Sollwertes der

Steuerung $M_{soll}$ sich eine nahezu konstante Motordrehzahl bei steigender Getriebedrehzahl einstellt und durch die Erhöhung und anschließende Reduzierung des von der Kupplung übertragbaren Drehmomentes wird die Motordrehzahl kurzfristig reduziert bevor sie anschließend wieder ansteigt. Dadurch wird der Energieeintrag im Bereich der Kupplung reduziert und die Beschleunigung des Fahrzeuges wird gesteigert. Durch ein anschließendes Absenken des von der Kupplung übertragbaren Drehmomentes wird eine tangentiale Annäherung der Motordrehzahl an die Getriebedrehzahl erreicht, so daß bei Drehzahlgleichheit keine Torsionsschwingungen im Antriebsstrang angeregt werden. Somit wird der Einkuppelvorgang bezüglich Beschleunigung des Fahrzeuges, Energiehaushalt und Komfort verbessert.

Besonders vorteilhaft ist es, wenn das von der Kupplung übertragbare Drehmoment von dem ersten vorgebbaren Wert $M_1$ zumindest kurzfristig auf einen erhöhten Wert $M_2$ erhöht wird und anschließend wieder auf $M_1$ abgesenkt wird. die Dauer der Erhöhung und das Maß der Erhöhung kann beispielsweise von der Fahrpedalbetätigung abhängig gewählt werden.

Bei einem anderen Ausführungsbeispiel ist es zweckmäßig, wenn das von der Kupplung übertragbare Drehmoment von dem ersten vorgebbaren Wert $M_1$ auf einen erhöhten Wert $M_2$ erhöht wird und anschließend bis zur Drehzahlgleichheit zwischen der Motor- und Getriebedrehzahl wieder abgesenkt wird.

Besonders vorteilhaft ist es, wenn die Erhöhung des von der Kupplung übertragbaren Drehmomentes von $M_1$ auf $M_2$ abhängig von dem Grad a der Fahrpedalbetätigung erfolgt Dadurch wird eine vorteilhafte Anpassung der Beschleunigung und der Schlupfreduzierung an die vom Fahrer eingestellte Fahrpedalbetätigung realisiert, die besonders komfortverbessernd ist.

In einem anderen Ausführungsbeispiel der Erfindung ist es zweckmäßig, wenn die Erhöhung des von der Kupplung übertragbaren Drehmomentes von $M_1$ auf $M_2$ abhängig von der Geschwindigkeit und/oder der Beschleunigung des Fahrzeuges erfolgt.

Weiterhin ist es zweckmäßig, wenn das von der Kupplung übertragbare Drehmoment nach der Drehzahlgleichheit zwischen Motordrehzahl und Getriebedrehzahl erhöht wird.

Ausführungsbeispiele der Erfindung werden anhand der Figuren näher erläutert, dabei zeigt:

| | |
|---|---|
| Figur 1 | eine schematische Darstellung eines Kraftfahrzeuges, |
| Figur 2a | ein Diagramm, |
| Figur 2b | ein Diagramm, |
| Figur 3 | eine zeitabhängige Darstellung von Fahrzeugdaten. |

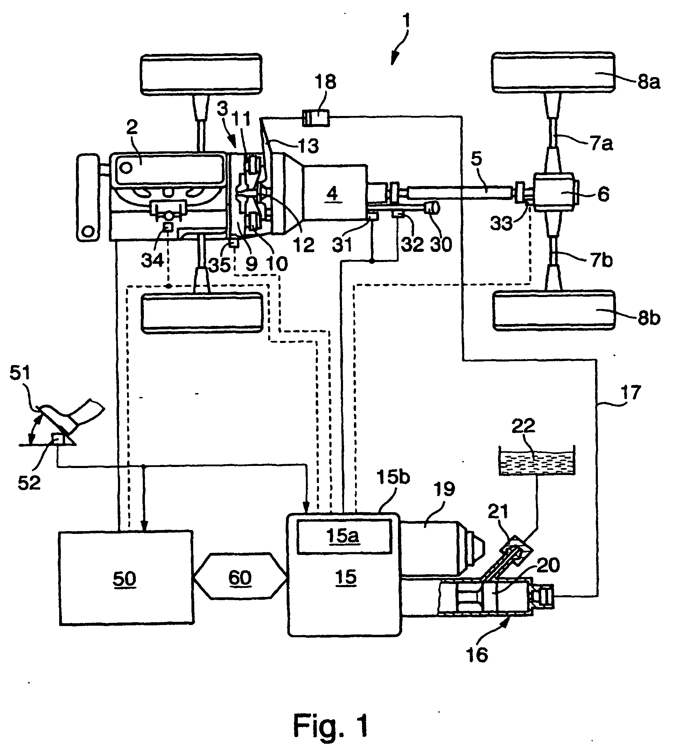

Die Figur 1 zeigt ein Kraftfahrzeug 1 mit einem Antriebsmotor 2, mit einer Kupplung 3 und einem Getriebe 4 im Antriebsstrang, wobei dem Getriebe eine Antriebswelle 5 nachgeordnet ist, welche mittels eines Differentiales 6 zwei Antriebswellen 7a und 7b antreibt, welche wiederum die angetriebenen Räder 8a und 8b antreiben. Die Kupplung 3 ist als Trockenreibungskupplung mit Druckplatte 10, Kupplungsscheibe 11, Ausrücklager 12 und Ausrückgabel 13 dargestellt, die auf einem Schwungrad 9 montiert ist, wobei die Kupplung mittels Ausrückgabel 13 mittels eines Aktuators 15 mit einem Geberzylinder 16 einer Druckmittelleitung, wie Hydraulikleitung, 17 und einem Nehmerzylinder 18 beaufschlagt oder betätigt werden kann. Der Aktuator ist mit einer Schnüffelbohrung 21 versehen, welche zu einem Reservoir 22 für das Druckmittel verbunden ist. Der Aktuator ist als druckmittelbetätigter Aktuator dargestellt, welcher einen Elektromotor 19 aufweist, welcher über ein Getriebe den Geberzylinderkolben 20 betätigt, so daß über die Druckmittelleitung 17 und den Nehmerzylinder 18 das Drehmomentübertragungssystem ein- und ausgerückt werden kann.

Die Betätigung der Kupplung kann bei einem weiteren Ausführungsbeispiel der Erfindung auch mittels eines rein hydraulisch wirkenden Aktuators mit Pumpe, Druckspeicher und Ventilen und Nehmerzylinder erfolgen, wie dies beispielsweise durch die DE 44 26 260 bekannt geworden ist.

Auch kann die Betätigung der Kupplung bei einem weiteren Ausführungsbeispiel der Erfindung auch mittels eines mechanisch-elektromotorisch wirkenden Aktuators mit einem Elektromotor als Antrieb und gegebenenfalls einem nachgeschaltetem Getriebe erfolgen.

Weiterhin umfaßt der Aktuator 15 ein Steuergerät 15a mit einer Steuerelektronik zur Steuerung der Betätigung der Kupplung mittels des Aktuators, wobei die Leistungselektronik und/oder die Steuerelektronik innerhalb des Aktuatorgehäuses 15b angeordnet sein kann. Die Anordnung der Elektronik und des Aktuators kann aber auch innerhalb getrennter Gehäuse realisiert sein.

Das Fahrzeug 1 weist zur Steuerung diverse Sensoren auf, deren Sensorsignale von der Steuereinheit zur Generierung des Steuersignales herangezogen werden. Beispielsweise verfügt das Getriebe 4 über einen Gangschalthebel 30 mit einem Gangerkennungssensor 31 und/oder ein Schaltabsichtssensor 32, welcher/welche eine Betätigung des Gangschalthebels und/oder die Position einer Getriebestellung detektiert.

Weiterhin ist das Fahrzeug mit zumindest einem Drehzahlsensor 33 ausgestattet, welcher die Drehzahl des Getriebes, wie die Getriebeabtriebswelle detektiert. Statt dessen kann auch ein Sensor vorhanden sein, welcher die Getriebeeingangsdrehzahl detektiert. Weiterhin ist ein Drosselklappensensor 34 angeordnet, welcher die Drosselklappenstellung detektiert. Ebenso ist ein Drehzahlsensor 35 vorhanden, welcher die Motordrehzahl detektiert. Auch kann ein Fahrpedalsensor 52 angeordnet sein, welcher das Maß der Betätigung des Fahrpedals 51, wie Gaspedals, detektiert. Statt des Fahrpedalsensorwertes kann auch das Signal des Drosselklappensensors 34 verwendet werden, um ein Maß für die Fahrpedalbetätigung zu erhalten.

Der Gangerkennungssensor 31 detektiert direkt oder indirekt die Position von getriebeinternen Schaltelementen oder den im Getriebe eingelegten Gang, so daß mittels des Signales zumindest der eingelegte Gang von der Steuereinheit 15a registriert wird. Weiterhin kann bei einem analogen Sensor die Bewegung der getriebeintemen Schaltelemente detektiert werden, so daß eine frühzeitige Erkennung des nächsten eingelegten Ganges durchgeführt werden kann. Zwischen den einzelnen Steuergeräten des Kraftfahrzeuges, wie die Steuereinheit 15a der automatisierten Kupplung und der Motorsteuerung 50 besteht eine Datenbusverbindung 60, wie beispielsweise CAN-Bus, wobei die Steuergeräte über diesen Datenbus Signale des Fahrzeuges oder von Zuständen oder Sensordaten senden und/oder empfangen. Beispielsweise kann die Motorsteuerung die Motordrehzahl ermitteln und über den Datenbus den anderen Steuergeräten zur Verfügung stellen, wie senden, so daß diese anderen Steuergeräte diese Größe nicht noch einmal ermitteln müssen.

Bei einem Anfahrvorgang wird das von der Kupplung übertragbare Drehmoment $M_K$ als Funktion der Fahrpedalstellung, wie Gaspedal, und/oder der zeitlichen Änderungsgeschwindigkeit der Fahrpedalstellung gesteuert. Durch die bei einer Fahrpedalbetätigung erhöhte Motordrehzahl und das von der Steuereinheit 15a gesteuerte von der Kupplung übertragbare Kupplungsmoment $M_K$ wird zumindest soviel Drehmoment auf die Antriebsräder übertragen, so daß das Fahrzeug anfährt.

Das von der Kupplung übertragbare Drehmoment $M_K$ wird gemäß der folgenden Formel gesteuert:

$$M_K = M_{K\_allgemein} * V ,$$

wobei gilt:

$M_K$ ist das von der Kupplung übertragbare Drehmoment, das auf einen fahrzeugbedingungsabhängigen Sollwert $M_{soll}$ gesteuert wird, $M_{K\_allgemein}$ ist ein allgemeines von der Kupplung übertragbares Drehmoment, das mittels eines Kennfeldes oder einer Kennlinie beispielsweise abhängig von der Motordrehzahl, dem Motormoment und/oder der Fahrpedalbetätigung festgelegt wird und V ist ein Faktor, der die Feinsteuerung zur Reduzierung der Schlupfdauer und des Schlupfbetrages übemimmt und somit zur Energieeintragsreduzierung im Bereich der Kupplung beträgt.

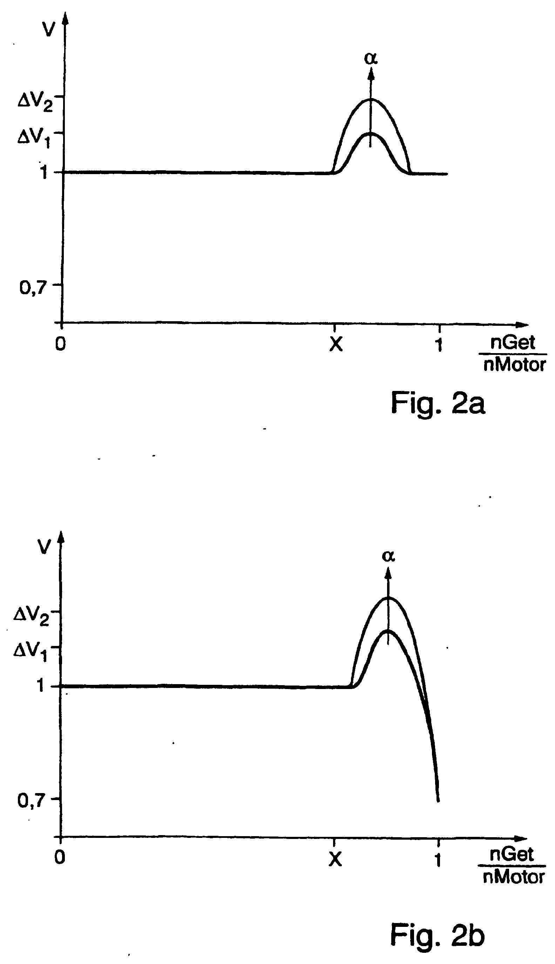

Die Figuren 2a und 2b zeigen die Abhängigkeit des Faktors V als Funktion des Quotienten $n_{Get}/n_{Motor}$ zwischen der Getriebedrehzahl $n_{Get}$ und der Motordrehzahl $n_{Motor}$. Die Figur 2a zeigt ein Ausführungsbeispiel, bei welchem kurz vor der Drehzahlgleichheit bei $n_{Get}/n_{Motor} = 1$ bei einem vorgebbaren Wert $n_{Get}/n_{Motor} = x$ ein Anstieg im Faktor V gesteuert wird. Die Figur 2b zeigt ein Ausführungsbeispiel, bei welchem kurz vor der Drehzahlgleichheit bei $n_{Get}/n_{Motor} = 1$ bei einem vorgebbaren Wert $n_{Get}/n_{Motor} = x$ ein Anstieg im Faktor V gesteuert wird. Nach Erreichen des Maximalwertes ÄV sinkt der Wert von V bis zur Drehzahigleichheit bei $n_{Get}/n_{Motor} = 1$ ab.

Der Wert der Erhöhung ÄV kann als Funktion der Fahrpedalbetätigung oder der zeitlichen Änderung der Fahrpedalbetätigung gesteuert werden, so daß gilt: ÄV = f(á, dá/dt, ...). Somit können unterschiedliche Werte $ÄV_1$ und $ÄV_2$ bei verschieden großen Werten der Fahrpedalbetätigung erreicht werden. Der Wert x des Beginns der Erhöhung kann beispielsweise auch fahrgeschwindigkeitsabhängig und/oder fahrpedalabhängig gewählt werden.

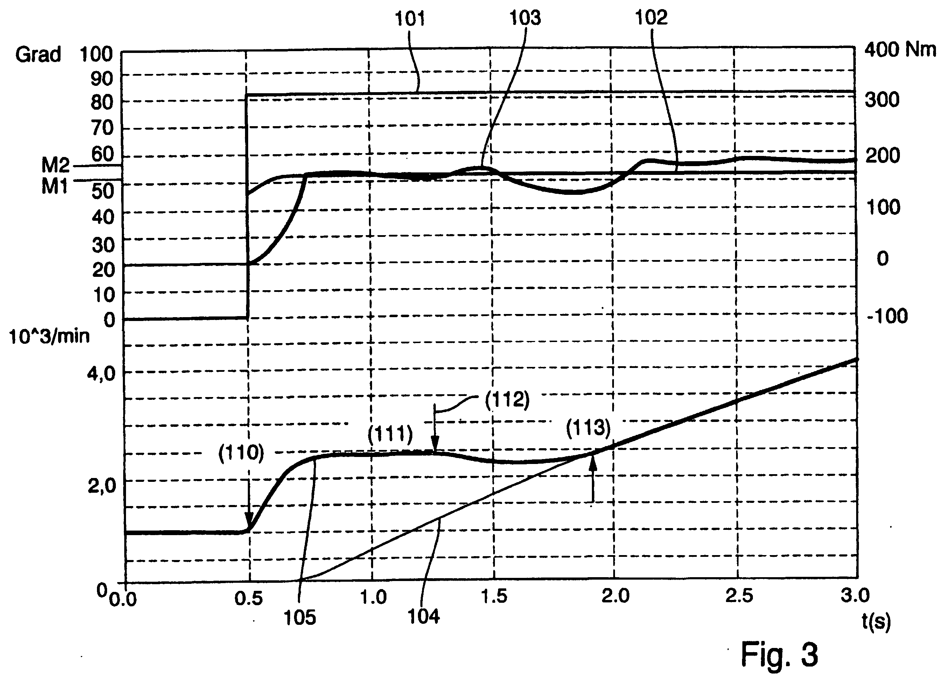

Die Figur 3 zeigt eine zeitliche Darstellung verschiedener Fahrzeuggrößen als Funktion der Zeit t. Dabei sind die Kurven wie folgt bezeichnet: die Fahrpedalbetätigung oder die Drosselklappenstellung 101; das Motormoment 102; das von der Kupplung übertragbare Drehmoment 103; die Getriebedrehzahl 104 und die Motordrehzahl 105.

Vor dem Zeitpunkt (110) ist das Fahrpedal unbetätigt, die Kupplung ist ausgerückt. Die Motordrehzahl ist im wesentlichen auf Leerlaufdrehzahl, das Motormoment ist auf dem Schleppmomentwert von ca. -50 Nm und die Getriebedrehzahl ist Null. Zum Zeitpunkt (110) wird das Fahrpedal betätigt und das Motormoment steigt auf einen vorgebbaren Wert, welcher der Fahrpedalbetäügung entspricht. Gleichzeitig steigt die Motordrehzahl. Auch wird die Kupplung automatisiert eingerückt, so daß das von der Kupplung übertragbare Drehmoment 103 ansteigt und sich auf den Wert $M_1$ einstellt.

Zum Zeitpunkt (111) ist das Motormoment 102 und die Motordrehzahl 105 nahezu konstant und die Getriebedrehzahl 104 erhöht sich.

Zum Zeitpunkt (112) bei konstanter Motordrehzahl 105, bei konstantem Motormoment 102 und bei konstantem von der Kupplung übertragbarem Drehmoment 103 wird der Faktor V zur Steuerung des von der Kupplung übertragenen Drehmomentes $M_K$ gemäß den Figuren 2a oder 2b erhöht

Dadurch erhöht sich das von der Kupplung übertragbare Drehmoment 103 und die Motordrehzahl 105 sinkt leicht ab. Nach Überschreiten des Maximums von $M_K$ (103) sinkt $M_K$ wieder ab, bis zum Zeitpunkt (113) die Drehzahlgleichheit der Motor- und Getriebedrehzahl erreicht ist.

Durch das Absinken des von der Kupplung übertragbaren Drehmomentes schmiegt sich die Motordrehzahl tangential an die steigende Getriebedrehzahl an.

**Patentansprüche**

1. Verfahren zur Steuerung einer Kupplung (3) für ein Kraftfahrzeug mit einer Vorrichtung zur automatisierten Betätigung der Kupplung (3) im Antriebsstrang des Fahrzeuges (1), mit einem Antriebsmotor (2) und einem Getriebe (4), mit einer Steuereinheit (15a) und einem von der Steuereinheit (15a) gesteuerten Aktuator (15) zur Betätigung der Kupplung (3), wobei bei betätigtem Fahrpedal (51) bei einem Anfahrvorgang das von der Kupplung (3) übertragbare Drehmoment $M_K$ (103) erhöht wird und im wesentlichen auf einen vorgebbaren Wert $M_{soll}$ gesteuert wird, **dadurch gekennzeichnet, daß** das von der Kupplung (3) übertragbare Drehmoment (103) vor Erreichen der Drehzahlgleichheit zwischen Motordrehzahl (105) und Getriebedrehzahl (104) zumindest kurzfristig erhöht wird, bis die Motordrehzahl (105) absinkt, und daraufhin das von der Kupplung (3) übertragbare Drehmoment (103) soweit abgesenkt wird, daß die Motordrehzahl (105) vor Erreichen der Drehzahlgleichheit wieder ansteigt.

2. Verfahren nach Anspruch 1, **dadurch gekennzeichnet, daß** das von der Kupplung (3) übertragbare Drehmoment (103) von dem ersten vorgebbaren Wert $M_1$ auf einen erhöhten Wert $M_2$ erhöht wird und anschließend bis zur Drehzahlgleichheit zwischen der Motordrehzahl (105)- und Getriebedrehzahl (104) wieder abgesenkt wird.

3. Verfahren nach Anspruch 2, **dadurch gekennzeichnet, daß** die Erhöhung des von der Kupplung (3) übertragbaren Drehmomentes (103) von $M_1$ auf $M_2$ abhängig vom Grad der Fahrpedalbetätigung erfolgt.

4. Verfahren nach Anspruch 2, **dadurch gekennzeichnet, daß** die Erhöhung des von der Kupplung (3) übertragbaren Drehmomentes (103) von $M_1$ auf $M_2$ abhängig von der Geschwindigkeit und/oder der Beschleunigung des Fahrzeuges (1) erfolgt.

5. Verfahren nach einem der vorhergehenden Ansprüche, **dadurch gekennzeichnet, daß** das von der Kupplung (3) übertragbare Drehmoment (103) nach der Drehzahlgleichheit zwischen Motordrehzahl (105) und Getriebedrehzahl (104) erhöht wird.

6. Kraftfahrzeug mit einer Vorrichtung zur automatisierten Betätigung der Kupplung (3) im Antriebsstrang des Fahrzeuges (1), wobei die Kupplung (3) mittels eines Verfahrens nach einem der vorherigen Ansprüche gesteuert wird.

**Claims**

1. Method for controlling a clutch (3) for a motor vehicle, with a device for the automated actuation of the clutch (3) in the drive train of the vehicle (1), with an engine (2) and a transmission (4), with a control unit (15a) and an actuator (15), controlled by the control unit (15a), for actuating the clutch (3), the torque $M_K$ (103) transmittable by the clutch (3) being increased when the accelerator pedal (51) is actuated during a starting operation and being controlled essentially to a predeterminable value $M_{des}$, **characterized in that** the torque (103) transmittable by the clutch (3) is increased at least briefly before equality of rotational speed is reached between the engine rotational speed (105) and the transmission rotational speed (104), until the engine rotational speed (105) falls, and the torque (103) transmittable by the clutch (3) is thereupon lowered to an extent such that the engine rotational speed (105) rises again before equality of rotational speed is reached.

2. Method according to Claim 1, **characterized in that** the torque (103) transmittable by the clutch (3) is increased from the first predeterminable value $M_1$ to an increased value $M_2$ and is subsequently lowered again as far as equality of rotational speed between the engine rotational speed (105) and the transmission rotational speed (104).

3. Method according to Claim 2, **characterized in that** the increase in the torque (103) transmittable by the clutch (3) from $M_1$ to $M_2$ takes place as a function of the degree of actuation of the accelerator pedal.

4. Method according to Claim 2, **characterized in that** the increase in the torque (103) transmittable by the clutch (3) from $M_1$ to $M_2$ takes place as a function of the speed and/or the acceleration of the vehicle (1).

5. Method according to one of the preceding claims, **characterized in that** the torque (103) transmittable by the clutch (3) is increased after equality of rotational speed between the engine rotational speed (105) and the transmission rotational speed (104).

6. Motor vehicle with a device for the automated actuation of the clutch (3) in the drive train of the vehicle (1), the clutch (3) being controlled by means of a method according to one of the preceding claims.

**Revendications**

1. Procédé de commande d'un embrayage (3) pour un véhicule automobile avec un dispositif pour l'actionnement automatisé de l'embrayage (3) dans la transmission du véhicule (1), avec un moteur d'entraînement (2) et une boîte de vitesses (4), avec une unité de commande (15a) et un actionneur (15) commandé par l'unité de commande (15a) pour l'actionnement de l'embrayage (3), le couple $M_K$ (103) pouvant être transmis par l'embrayage (3) lorsque la pédale d'accélération (51) est enfoncée lors d'une opération de démarrage étant augmenté et étant commandé essentiellement à une valeur prédéfinissable $M_{soll}$, **caractérisé en ce que** le couple (103) pouvant être transmis par l'embrayage (3) avant d'atteindre l'égalité de vitesses entre la vitesse du moteur (105) et la vitesse de la boîte de vitesses (104) étant augmenté au moins brièvement, jusqu'à ce que la vitesse du moteur (105) diminue, et ensuite le couple (103) pouvant être transmis par l'embrayage (3) est abaissé jusqu'à ce que la vitesse du moteur (105) remonte à nouveau avant d'atteindre l'égalité de vitesses.

2. Procédé selon la revendication 1, **caractérisé en ce que** le couple (103) pouvant être transmis par l'embrayage (3) est augmenté de la première valeur prédéfinissable $M_1$ à une valeur plus élevée $M_2$ et ensuite est à nouveau abaissé jusqu'à l'égalité de vitesse entre la vitesse du moteur (105) et la vitesse de la boîte de vitesses (104).

3. Procédé selon la revendication 2, **caractérisé en ce que** l'augmentation du couple (103) pouvant être transmis par l'embrayage (3) de $M_1$ à $M_2$ s'effectue en fonction du degré d'actionnement de la pédale d'accélération.

4. Procédé selon la revendication 2, **caractérisé en ce que** l'augmentation du couple (103) pouvant être transmis par l'embrayage (3) de $M_1$ à $M_2$ s'effectue en fonction de la vitesse et/ou de l'accélération du véhicule (1).

5. Procédé selon l'une quelconque des revendications précédentes, **caractérisé en ce que** le couple (103) pouvant être transmis par l'embrayage (3) est augmenté après l'égalité de vitesses entre la vitesse du moteur (105) et la vitesse de la boîte de vitesses (104).

6. Véhicule comprenant un dispositif pour l'actionnement automatisé de l'embrayage (3) dans la transmission du véhicule (1), l'embrayage (3) étant commandé au moyen d'un procédé selon l'une quelconque des revendications précédentes.

**Fig. 1**

Fig. 2a

Fig. 2b

Fig. 3

EP 1 065 401 B1